# FASCICULE DE BREVET EUROPEEN

(11) **EP 3 772 069 B1**
(45) Date de publication et mention de la délivrance du brevet: **07.06.2023**
(21) Numéro de dépôt: 20188285.9
(22) Date de dépôt: 29.07.2020
(51) Int. Cl.: H01B 9/00, H01B 3/00

(54) **CÂBLE ÉLECTRIQUE PRÉSENTANT UNE CONDUCTIVITÉ THERMIQUE AMÉLIORÉE**
ELEKTRISCHES KABEL MIT VERBESSERTER WÄRMELEITFÄHIGKEIT
ELECTRIC CABLE HAVING IMPROVED THERMAL CONDUCTIVITY

(30) Priorité: 30.07.2019 FR 1908652
(43) Date de publication de la demande: 03.02.2021
(73) Titulaire: Nexans, 92400 Courbevoie (FR)
(72) Inventeur: PEREGO, Gabriele, 20144 Milan (IT); MAZEL, Christelle, 38300 RUY (FR); CHARRIER, Dimitri, 69130 ECULLY (FR); MERLE, Daphné, 69003 LYON (FR)
(74) Mandataire: Ipsilon

(56) Documents cités:
- EP-A1- 0 893 801
- EP-A1- 2 528 968
- WO-A1-2011/125924
- WO-A1-2012/069864
- WO-A1-2018/167442
- WO-A1-2019/117055
- US-A1- 2013 008 691
- XIAO MENG ET AL: "Review of high thermal conductivity polymer dielectrics for electrical insulation", HIGH VOLTAGE, THE INSTITUTION OF ENGINEERING AND TECHNOLOGY, MICHAEL FARADAY HOUSE, SIX HILLS WAY, STEVENAGE, HERTS. SG1 2AY, UK, vol. 1, no. 1, 1 April 2016 (2016-04-01), pages 34-42, XP006056333, DOI: 10.1049/HVE.2016.0008

## Description

L'invention concerne un câble comprenant au moins une couche électriquement isolante obtenue à partir d'une composition polymère comprenant au moins un matériau polymère thermoplastique à base de polypropylène et au moins une charge inorganique choisie parmi de l'oxyde d'aluminium, un oxyde d'aluminium hydraté, l'oxyde de magnésium, l'oxyde de zinc, et un de leurs mélanges, la charge inorganique représente au moins 10% en poids, par rapport au poids total de la composition polymère, la composition polymère comprend en outre un liquide diélectrique ; et un procédé de préparation dudit câble.

L'invention s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sousmarin, terrestre, ou encore de l'aéronautique.

L'invention s'applique en particulier aux câbles électriques présentant une conductivité thermique améliorée.

Un câble de transport d'énergie à moyenne ou à haute tension comprend de préférence, de l'intérieur vers l'extérieur :
- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche isolante,
- éventuellement un écran électrique entourant ladite couche semi-conductrice externe, et
- éventuellement une gaine de protection électriquement isolante entourant ledit écran électrique.

La couche électriquement isolante comprend généralement au moins une polyoléfine telle qu'un polymère d'éthylène (i.e. un homo- ou copolymère d'éthylène) réticulé ou non réticulé. Les polymères d'éthylène non réticulés (e.g. polyéthylène basse densité non réticulé ou LDPE non réticulé) ne peuvent généralement pas être utilisés à des températures supérieures à 70°C, et réduisent de ce fait la capacité du câble à transporter de l'énergie électrique de façon à éviter toute surchauffe de la couche électriquement isolante à des températures supérieures à 70°C. *A contrario,* les polymères d'éthylène réticulés (e.g. XLPE) peuvent être utilisés jusqu'à des températures de 90°C. Cependant, ces polymères ne sont pas facilement recyclables, le processus de réticulation (vulcanisation) pour produire une couche homogène est contraignant en termes de coût de production, et/ou de capacité de production. Enfin, la réticulation peut parfois débuter de façon prématurée dans l'extrudeuse (vis, collier) et/ou la tête d'extrudeuse, induisant une formation de particules de XLPE dégradé dans l'extrudeuse (également appelé « scorch »), qui peuvent ensuite migrer dans la couche électriquement isolante ou dans la couche semi-conductrice du câble et y créer des défauts. La présence de ces particules affecte alors les propriétés finales du câble. Ce phénomène est connu sous la dénomination anglaise *« scorch phenomena* » pour phénomène de grillage.

Les polymères de propylène ont généralement des propriétés de conductivité thermiques légèrement inférieures à celles des polymères d'éthylène. Par conséquent, leur utilisation peut engendrer une diminution de l'évacuation de la chaleur générée par l'effet Joule, et ainsi de la quantité d'énergie transportée, celle-ci étant fonction de la température maximale acceptable de l'élément électriquement conducteur allongé.

Pour remédier à ce problème, la demande internationale WO2018167442A1 décrit un câble électrique comprenant au moins un élément électriquement conducteur allongé et au moins une couche électriquement isolante obtenue à partir d'une composition polymère comprenant au moins un matériau polymère thermoplastique à base de polypropylène et au moins une charge inorganique tel que du kaolin ou de la craie. Toutefois, les propriétés mécaniques du câble ainsi obtenu ne sont pas optimisées. Autres documents pertinents sont: EP0893801A1, WO2019/117055A1, WO2011/125924A1, WO2012/069864A1, EP2528968A1 et US2013/008691A1.

Le but de la présente invention est par conséquent de pallier les inconvénients des techniques de l'art antérieur en proposant un câble électrique, notamment à moyenne ou haute tension, à base de polymère(s) de propylène, ledit câble, pouvant fonctionner à des températures supérieures à 70°C, présentant des propriétés mécaniques améliorées, notamment en termes d'élongation à la rupture et de résistance à la traction, tout en garantissant une bonne conductivité thermique.

Le but est atteint par l'invention qui va être décrite ci-après.

L'invention a pour premier objet un câble électrique selon la revendication indépendante 1.

La combinaison d'un matériau polymère thermoplastique à base de polypropylène avec la charge inorganique telle que définie dans l'invention permet d'obtenir une couche électriquement isolante ayant des propriétés mécaniques améliorées, notamment en termes d'élongation à la rupture et de résistance à la traction, tout en garantissant une bonne conductivité thermique, voire une meilleure conductivité thermique.

Un mélange des charges inorganiques est de préférence un mélange de deux ou trois desdites charges inorganiques.

Dans la présente invention, l'oxyde d'aluminium, également bien connu sous le nom « alumine », est un composé chimique de formule Al₂O₃.

L'oxyde d'aluminium hydraté ou alumine hydratée peut être un oxyde d'aluminium monohydraté ou polyhydraté, et de préférence monohydraté ou trihydraté.

À titre d'exemple d'oxyde d'aluminium monohydraté, on peut citer, la boéhmite, qui est le polymorphe gamma de AlO(OH) ou Al₂O₃.H₂O ; ou la diaspore, qui est le polymorphe alpha de AIO(OH) ou Al₂O₃.H₂O.

À titre d'exemple d'oxyde d'aluminium polyhydraté, et de préférence trihydraté, on peut citer, le gibbsite ou hydrargillite, qui est le polymorphe gamma de Al(OH)₃ ; la bayerite qui est le polymorphe alpha de Al(OH)₃ ; ou la nordstrandite, qui est le polymorphe béta de Al(OH)₃.

L'oxyde d'aluminium hydraté est également bien connu sous le nom « hydroxyde d'oxyde d'aluminium » ou « hydroxyde d'alumine ».

L'oxyde d'aluminium est préféré comme charge inorganique.

L'oxyde d'aluminium (respectivement l'oxyde de magnésium) est notamment un oxyde d'aluminium calciné (respectivement un oxyde de magnésium calciné).

Dans la présente invention, la charge inorganique représente au moins 10% en poids, par rapport au poids total de la composition polymère.

La charge inorganique peut être sous la forme de particules de dimension allant de 0,01 à 6 µm environ, de préférence de 0,05 à 2 µm environ, de façon particulièrement préférée de 0,075 à 1,5 µm environ, et de façon plus particulièrement préférée de 0,1 à 1,1 µm environ.

En considérant plusieurs particules de charge inorganique selon l'invention, le terme « dimension » signifie la dimension moyenne en nombre de l'ensemble des particules d'une population donnée, cette dimension étant classiquement déterminée par des méthodes bien connues de l'homme du métier.

La dimension de la ou des particules selon l'invention peut être par exemple déterminée par microscopie, notamment par microscope électronique à balayage (MEB) ou par microscope électronique transmission (MET).

Selon une forme de réalisation préférée de l'invention, la charge inorganique peut comprendre un mélange de particules de dimension allant de 0,01 à 0,50 µm environ, et de préférence de 0,05 à 0,25 µm environ ; et de particules de dimension allant de 0,60 à 2 µm environ, et de préférence de 0,75 à 1,5 µm environ.

La charge inorganique peut être « traitée » ou « non traitée », et de préférence « traitée ».

On entend par « charge inorganique traitée » une charge inorganique ayant subi un traitement de surface, ou en d'autres termes, une charge inorganique traitée en surface. Ledit traitement de surface permet notamment de modifier les propriétés de surface de la charge inorganique, par exemple pour améliorer la compatibilité de la charge inorganique avec le matériau polymère thermoplastique.

Dans un mode de réalisation préféré, la charge inorganique de l'invention peut être silanisée, ou en d'autres termes peut être traitée pour obtenir une charge inorganique silanisée.

Le traitement de surface utilisé pour obtenir la charge inorganique silanisée est notamment un traitement de surface à partir d'au moins un composé silane (avec ou sans agent de couplage), ce type de traitement de surface étant bien connu de l'homme du métier.

Ainsi, la charge inorganique silanisée de l'invention peut comprendre à sa surface des groupements siloxane et/ou silane. Lesdits groupements peuvent être du type vinylsilane, alkylsilane, epoxysilane, methacryloxysilane, acryloxysilane, aminosilane ou mercaptosilane.

Le composé silane utilisé pour obtenir la charge inorganique silanisée peut être choisi parmi :
- des alkyltriméthoxysilane ou des alkyltriéthoxysilane, tels que par exemple octadecyltriméthoxysilane (OdTMS - C18), octyl(triéthoxy)silane (OTES - C8), methyl triméthoxysilane, hexadecyl triméthoxysilane,
- des vinyltriméthoxysilane ou des vinyltriéthoxysilane,
- des méthacryloxylsilane ou des acryloxysilane, tels que par exemple 3-méthacryloxypropyl méthyldiméthoxysilane, 3-méthacryloxypropyl triméthoxysilane, 3-méthacryloxypropyl triméthoxysilane, 3-acryloxypropyl triméthoxysilane, et
- un de leurs mélanges

La charge inorganique peut avoir une surface spécifique selon la méthode BET allant de 1 à 20 g/cm² environ, et de préférence allant de 7,5 à 17 g/cm² environ.

Dans la présente invention, la surface spécifique de la charge inorganique peut être facilement déterminée selon la norme DIN 9277 (2010).

Selon une forme de réalisation préférée de l'invention, la charge inorganique peut comprendre un mélange de particules de surface spécifique allant de 2 à 9 g/cm² environ, et de particules de surface spécifique allant de 10 à 17 g/cm² environ.

Le matériau polymère thermoplastique à base de polypropylène peut comprendre un homopolymère ou un copolymère de propylène P₁, et de préférence un copolymère de propylène P₁.

L'homopolymère de propylène P₁ a de préférence un module élastique allant de 1250 à 1600 MPa environ.

L'homopolymère de propylène P₁ peut représenter au moins 10% en poids, et de préférence de 15 à 30% en poids, par rapport au poids total du matériau polymère thermoplastique à base de polypropylène.

À titre d'exemples de copolymères de propylène P₁, on peut citer les copolymères de propylène et d'oléfine, l'oléfine étant notamment choisie parmi l'éthylène et une oléfine α₁ différente du propylène.

L'éthylène ou l'oléfine α₁ différente du propylène du copolymère de propylène et d'oléfine représente de préférence au plus 15% en mole environ, et de façon particulièrement préférée au plus 10% en mole environ, par rapport au nombre de moles total de copolymère de propylène et d'oléfine.

L'oléfine α₁ différente du propylène peut répondre à la formule CH₂=CH-R¹, dans laquelle R¹ est un groupe alkyle linéaire ou ramifié ayant de 2 à 12 atomes de carbone, notamment choisie parmi les oléfines suivantes : 1-butène, 1-pentène, 4-méthyl-1-pentène, 1-hexène, 1-octène, 1-décène, 1-dodécène, et un de leurs mélanges.

Les copolymères de propylène et d'éthylène sont préférés à titre de copolymère de propylène P₁.

Le copolymère de propylène P₁ peut être un copolymère statistique de propylène ou un copolymère de propylène hétérophasé, et de préférence un copolymère de propylène hétérophasé.

Dans l'invention, le copolymère statistique de propylène P₁ a de préférence un module élastique allant de 600 à 1200 MPa environ.

À titre d'exemple de copolymère statistique de propylène P₁, on peut citer celui commercialisé par la société Borealis sous la référence Bormed^{®} RB 845 MO.

Le copolymère de propylène hétérophasé P₁ peut comprendre une phase thermoplastique de type propylène et une phase élastomère thermoplastique de type copolymère d'éthylène et d'une oléfine α₂.

L'oléfine α₂ de la phase élastomère thermoplastique du copolymère de propylène hétérophasé P₁ peut être le propylène.

La phase élastomère thermoplastique du copolymère de propylène hétérophasé P₁ peut représenter au moins 20% en poids environ, et de préférence au moins 45% en poids environ, par rapport au poids total du copolymère de propylène hétérophasé P₁.

Le copolymère de propylène hétérophasé P₁ a de préférence un module élastique allant de 50 à 1200 MPa environ, et de façon particulièrement préférée : soit un module élastique allant de 50 à 550 MPa environ, et de façon plus particulièrement préférée allant de 50 à 300 MPa environ ; soit un module élastique allant de 600 à 1200 MPa environ.

À titre d'exemple de copolymère de propylène hétérophasé, on peut mentionner le copolymère de propylène hétérophasé commercialisé par la société LyondellBasell sous la référence Adflex^{®} Q 200 F, ou le copolymère hétérophasé commercialisé par la société LyondellBasell sous la référence EP^{®}2967.

L'homopolymère ou le copolymère de propylène P₁ peut avoir une température de fusion supérieure à 110°C environ, de préférence supérieure à 130°C environ, de façon particulièrement préférée supérieure à 140°C environ, et de façon plus particulièrement préférée allant de 140 à 170°C environ.

L'homopolymère ou le copolymère de propylène P₁ peut avoir une enthalpie de fusion allant de 20 à 100 J/g environ.

L'homopolymère de propylène P₁ peut avoir une enthalpie de fusion allant de 80 à 90 J/g environ.

Le copolymère statistique de propylène P₁ peut avoir une enthalpie de fusion allant de 40 à 80 J/g environ.

Le copolymère de propylène hétérophasé P₁ peut avoir une enthalpie de fusion allant de 20 à 50 J/g environ.

L'homopolymère ou le copolymère de propylène P₁ peut avoir un indice de fluidité allant de 0,5 à 3 g/10 min, mesuré à 230°C environ avec une charge de 2,16 kg environ selon la norme ASTM D1238-00.

Le copolymère statistique de propylène P₁ peut avoir un indice de fluidité allant de 1,2 à 2,5 g/10 min, et de préférence allant de 1,5 à 2,5 g/10 min, mesuré à 230°C environ avec une charge de 2,16 kg environ selon la norme ASTM D1238-00.

Le copolymère de propylène hétérophasé P₁ peut avoir un indice de fluidité allant de 0,5 à 1,5 g/10 min, et de préférence allant de 0,5 à 1,4 g/10 min environ, mesuré à 230°C environ avec une charge de 2,16 kg environ selon la norme ASTM D1238-00.

Le matériau polymère thermoplastique à base de polypropylène peut comprendre plusieurs copolymères de propylène P₁ différents, notamment deux copolymères de propylène P₁ différents, lesdits copolymères de propylène P₁ étant tels que définis ci-dessus.

En particulier, le matériau polymère thermoplastique à base de polypropylène peut comprendre un copolymère statistique de propylène (en tant que premier copolymère de propylène P₁) et un copolymère de propylène hétérophasé (en tant que deuxième copolymère de propylène P₁), ou deux copolymères de propylène hétérophasés différents.

Lorsque le matériau polymère thermoplastique à base de polypropylène comprend un copolymère statistique de propylène et un copolymère de propylène hétérophasé, ledit copolymère de propylène hétérophasé a de préférence un module élastique allant de 50 à 300 Mpa environ.

Selon une forme de réalisation de l'invention, les deux copolymères de propylène hétérophasés ont un module élastique différent. De préférence, le matériau polymère thermoplastique à base de polypropylène comprend un premier copolymère de propylène hétérophasé ayant un module élastique allant de 50 à 550 MPa environ, et de façon particulièrement préférée allant de 50 à 300 MPa environ ; et un deuxième copolymère de propylène hétérophasé ayant un module élastique allant de 600 à 1200 MPa environ.

Avantageusement, les premier et deuxième copolymères de propylène hétérophasés ont un indice de fluidité tel que défini dans l'invention.

Ces combinaisons de copolymères de propylène P₁ peuvent permettre avantageusement d'améliorer les propriétés mécaniques de la couche polymère. En particulier, la combinaison permet d'obtenir des propriétés mécaniques optimisées de la couche polymère, notamment en termes d'élongation à la rupture, et de flexibilité ; et/ou permet de former une couche polymère plus homogène, notamment favorise la dispersion du liquide diélectrique dans le matériau polymère thermoplastique à base de polypropylène de ladite couche polymère.

Selon une forme de réalisation préférée de l'invention, le copolymère de propylène P₁ ou les copolymères de propylène P₁ lorsqu'il y en plusieurs, représente(nt) au moins 50% en poids environ, de préférence de 55 à 90% en poids environ, et de façon particulièrement préférée de 60 à 90% en poids environ, par rapport au poids total du matériau polymère thermoplastique à base de polypropylène.

Le copolymère statistique de propylène P₁ peut représenter au moins 20% en poids, et de préférence de 30 à 70% en poids, par rapport au poids total du matériau polymère thermoplastique à base de polypropylène.

Le copolymère de propylène hétérophasé P₁ ou les copolymères de propylène hétérophasés P₁ lorsqu'il y en plusieurs, peu(ven)t représenter de 5 à 95% en poids environ, de préférence de 50 à 90% en poids environ, et de façon particulièrement préférée de 60 à 80% en poids environ, par rapport au poids total du matériau polymère thermoplastique à base de polypropylène.

Le matériau polymère thermoplastique à base de polypropylène peut comprendre en outre un homopolymère ou un copolymère d'oléfine P₂.

Ledit homopolymère ou copolymère d'oléfine P₂ est de préférence différent dudit homopolymère ou un copolymère de propylène P₁.

L'oléfine du copolymère d'oléfine P₂ peut être choisie parmi l'éthylène et une oléfine α₃ répondant à la formule CH₂= CH-R², dans laquelle R² est un groupe alkyle linéaire ou ramifié ayant de 1 à 12 atomes de carbone.

L'oléfine α₃ est de préférence choisie parmi les oléfines suivantes : propylène, 1-butène, isobutylène, 1-pentène, 4-méthyl-1-pentène, 1-hexène, 1-octène, 1-décène, 1-dodécène, et un de leurs mélanges.

L'oléfine α₃ de type propylène, 1-hexène ou 1-octène est particulièrement préférée.

La combinaison de polymères P₁ et P₂ permet d'obtenir un matériau polymère thermoplastique présentant de bonnes propriétés mécaniques, notamment en termes de module élastique, et électriques.

L'homopolymère ou le copolymère d'oléfine P₂ est de préférence un polymère d'éthylène.

Selon une forme de réalisation préférée de l'invention, le polymère d'éthylène est un polyéthylène basse densité, un polyéthylène linéaire basse densité, un polyéthylène moyenne densité, ou un polyéthylène haute densité, et de préférence un polyéthylène haute densité ; notamment selon la norme ISO 1183A (à une température de 23°C).

Le polymère d'éthylène a de préférence un module élastique d'au moins 400 MPa, et de façon particulièrement préféré d'au moins 500 MPa.

Dans la présente invention, le module élastique ou module d'Young d'un polymère (connu sous l'anglicisme « *Tensile Modulus »*) est bien connu de l'homme du métier, et peut être facilement déterminé selon la norme ISO 527-1, -2 (2012). La norme ISO 527 présente une première partie, notée « ISO 527-1 », et une deuxième partie, notée « ISO 527-2 » spécifiant les conditions d'essai relatives aux principes généraux de la première partie de la norme ISO 527.

Dans la présente invention, l'expression « basse densité » signifie ayant une densité allant de 0,91 à 0,925 g/cm³ environ, ladite densité étant mesurée selon la norme ISO 1183A (à une température de 23°C).

Dans la présente invention, l'expression « moyenne densité » signifie ayant une densité allant de 0,926 à 0,940 g/cm³ environ, ladite densité étant mesurée selon la norme ISO 1183A (à une température de 23°C).

Dans la présente invention, l'expression « haute densité » signifie ayant une densité allant de 0,941 à 0,965 g/cm³, ladite densité étant mesurée selon la norme ISO 1183A (à une température de 23°C).

Selon une forme de réalisation préférée de l'invention, l'homopolymère ou copolymère d'oléfine P₂ représente de 5 à 50% en poids environ, et de façon particulièrement préférée de 10 à 40% en poids environ, par rapport au poids total du matériau polymère thermoplastique à base de polypropylène.

Selon une forme de réalisation particulièrement préférée de l'invention, le matériau polymère thermoplastique à base de polypropylène comprend deux copolymères de propylène P₁ tels qu'un copolymère statistique de propylène et un copolymère de propylène hétérophasé ou deux copolymères de propylène hétérophasés différents ; et un homopolymère ou copolymère d'oléfine P₂ tel qu'un polymère d'éthylène. Cette combinaison de copolymères de propylène P₁ et d'un homopolymère ou copolymère d'oléfine P₂ permet d'améliorer encore les propriétés mécaniques de la couche polymère, tout en garantissant une bonne conductivité thermique.

Le matériau polymère thermoplastique de la composition polymère de la couche électriquement isolante du câble de l'invention est de préférence hétérophasé (i.e. il comprend plusieurs phases). La présence de plusieurs phases provient généralement du mélange de deux polyoléfines différentes, tel qu'un mélange de polymères de propylène différents ou un mélange d'un polymère de propylène et d'un polymère d'éthylène.

La composition polymère de l'invention comprend en outre un liquide diélectrique, notamment formant un mélange intime avec le matériau polymère thermoplastique.

Le liquide diélectrique améliore l'interface charge inorganique/matériau polymère thermoplastique à base de polypropylène. La présence du liquide diélectrique permet ainsi d'obtenir de meilleures propriétés diélectriques (i.e. meilleure isolation électrique), et notamment une meilleure rigidité diélectrique de la couche obtenue à partir de la composition polymère. Elle peut également permettre d'améliorer les propriétés mécaniques et/ou la tenue au vieillissement de ladite couche.

À titre d'exemples de liquide diélectrique, on peut citer les huiles minérales (e.g. huiles naphténiques, huiles paraffiniques ou huiles aromatiques), les huiles végétales (e.g. huile de soja, huile de lin, huile de colza, huile de maïs ou huile de ricin) ou les huiles synthétiques telles que les hydrocarbures aromatiques (alkylbenzènes, alkylnaphtalènes, alkylbiphényles, alkydiaryléthylènes, etc...), les huiles de silicone, les éther-oxydes, les esters organiques ou les hydrocarbures aliphatiques, ou un de leurs mélanges.

Le liquide diélectrique comprend de préférence au moins une huile minérale.

Selon un mode de réalisation particulier, le liquide diélectrique représente de 1% à 20% en poids environ, de préférence de 2 à 15% en poids environ, et de façon particulièrement préférée de 3 à 12% en poids environ, par rapport au poids total du matériau polymère thermoplastique à base de polypropylène.

Le liquide diélectrique peut comprendre au moins 70% en poids environ d'huile minérale, et de préférence au moins 80% en poids environ d'huile minérale, par rapport au poids total du liquide diélectrique.

L'huile minérale est généralement liquide à 20-25°C environ.

L'huile minérale est de préférence choisie parmi les huiles naphténiques et les huiles paraffiniques.

L'huile minérale est obtenue à partir du raffinage d'un brut pétrolier.

Selon une forme de réalisation particulièrement préférée de l'invention, l'huile minérale comprend une teneur en carbone paraffinique (Cp) allant de 45 à 65% atomique environ, une teneur en carbone naphténique (Cn) allant de 35 à 55% atomique environ et une teneur en carbone aromatique (Ca) allant de 0,5 à 10% atomique environ.

Le liquide diélectrique comprend avantageusement une huile minérale, notamment telle que définie dans l'invention, et au moins un composé polaire de type benzophénone, acétophénone ou un de leurs dérivés.

Dans un mode de réalisation particulier, le composé polaire de type benzophénone, acétophénone ou un de leurs dérivés représente au moins 2,5% en poids environ, de préférence au moins 3,5% en poids environ, et de façon particulièrement préférée au moins 4% en poids environ, par rapport au poids total du liquide diélectrique.

Le liquide diélectrique peut comprendre au plus 30% en poids environ, de préférence au plus 20% en poids environ, et encore plus préférentiellement au plus 15% en poids environ, de composé polaire de type benzophénone, acétophénone ou un de leurs dérivés, par rapport au poids total du liquide diélectrique. Cette quantité maximale permet de garantir des pertes diélectriques modérées, voire faibles (e.g. inférieures à 10⁻³ environ), et également d'éviter la migration du liquide diélectrique hors de la couche électriquement isolante.

Selon une forme de réalisation préférée de l'invention, le composé polaire de type benzophénone, acétophénone ou un de leurs dérivés est choisi parmi la benzophénone, la dibenzosubérone, la fluorénone et l'anthrone. La benzophénone est particulièrement préférée.

Le matériau polymère thermoplastique à base de polypropylène peut comprendre en outre un ou plusieurs additifs.

Les additifs sont bien connus de l'homme du métier et peuvent être choisis parmi des agents favorisant la mise en oeuvre tels que des lubrifiants, des agents compatibilisants, ou des agents de couplage, des antioxydants, des agents anti-UV, des agents anti-cuivre, des agents anti-arborescences d'eau, des pigments, et un de leurs mélanges.

Le matériau polymère thermoplastique à base de polypropylène peut typiquement comprendre de 0,01 à 5% en poids environ, et de préférence de 0,1 à 2% en poids environ d'additifs, par rapport au poids total du matériau polymère thermoplastique à base de polypropylène.

Plus particulièrement, les antioxydants permettent de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine, et un de leurs mélanges.

À titre d'exemples de phénols encombrés, on peut citer le 1,2-bis(3,5-di-tert-butyl-4-hydroxyhydrocinnamoyl) hydrazine (Irganox^{®} MD 1024), le pentaérythritol tétrakis(3-(3,5-di-tert-butyl-4-hydroxyphényl)propionate) (Irganox^{®} 1010), l'octadécyl 3-(3,5-di-tert-butyl-4-hydroxyphényl)propionate (Irganox^{®} 1076), le 1,3,5-triméthyl-2,4,6-tris(3,5-di-tert-butyl-4-hydroxybenzyl)benzène (Irganox^{®} 1330), le 4,6-bis (octylthiométhyl)-o-crésol (Irgastab^{®} KV10 ou Irganox^{®} 1520), le 2,2'-thiobis(6-tert-butyl-4-méthylphénol) (Irganox^{®} 1081), le 2,2'- thiodiéthylène bis[3-(3,5-di-tert-butyl-4-hydroxyphényl) propionate] (Irganox^{®} 1035), le tris (3,5-di-tert-butyl-4-hydroxybenzyl) isocyanurate (Irganox^{®} 3114), le 2,2'-oxamido-bis(éthyl-3(3,5-di-tert-butyl-4-hydroxyphényle)propionate) (Naugard XL-1), ou le 2,2'-*méthylènebis*(6*-tert-butyl*-4-*méthylphénol*).

À titre d'exemples d'antioxydants à base de soufre, on peut citer les thioéthers tels que le didodécyl-3,3'-thiodipropionate (Irganox^{®} PS800), le distéaryl thiodipropionate ou dioctadecyl-3,3'-thiodipropionate (Irganox^{®} PS802), le bis[2-méthyle-4-{3-n-alkyle (C₁₂ ou C₁₄) thiopropionyloxy} *-5-tert-*butylphényl]sulfide, le thiobis-[2-*tert*-butyl-5-méthyle-4,1-phénylène] bis [3-(dodécylthio)propionate], ou le 4,6-bis(octylthiométhyle)-o-crésol (Irganox^{®} 1520 ou Irgastab^{®} KV10).

À titre d'exemples d'antioxydants à base de phosphore, on peut citer le tris(2,4-di-tert-butyl-phényle)phosphite (Irgafos^{®} 168) ou le bis(2,4-di-tert-butylphényl)pentaérythritol diphosphite (Ultranox^{®} 626).

À titre d'exemples d'antioxydants de type amine, on peut citer les phénylène diamines (e.g. paraphénylènes diamines tels que 1PPD ou 6PPD), les diphénylamine styrène, les diphénylamines, le 4-(1-méthyl-1-phényléthyl)-N-[4-(1-méthyl-1-phényléthyl)phényl]aniline (Naugard 445), les mercapto benzimidazoles, ou le 2,2,4-triméthyl-1,2 dihydroquinoline polymérisé (TMQ).

À titre d'exemples de mélanges d'antioxydants utilisables selon l'invention, on peut citer l'Irganox B 225 qui comprend un mélange équimolaire d'Irgafos 168 et d'Irganox 1010 tels que décrits ci-dessus.

La composition polymère de la couche électriquement isolante de l'invention est une composition polymère thermoplastique. Elle n'est donc pas réticulable.

En particulier, la composition polymère ne comprend pas d'agents de réticulation, d'agents de couplage de type silane, de peroxydes et/ou d'additifs qui permettent une réticulation. En effet de tels agents dégradent le matériau polymère thermoplastique à base de polypropylène.

La composition polymère est de préférence recyclable.

La composition polymère peut en outre comprendre au moins une charge inorganique différente de la charge inorganique choisie parmi de l'oxyde d'aluminium, un oxyde d'aluminium hydraté, l'oxyde de magnésium, l'oxyde de zinc, et un de leurs mélanges, telle que du talc, du trihydrate d'aluminium Al(OH)₃, ou du dihydrate de magnésium Mg(OH)₂ ; et/ou au moins une charge minérale sans halogènes destinée à améliorer le comportement au feu de la composition polymère.

La charge inorganique différente de la charge inorganique choisie parmi de l'oxyde d'aluminium, un oxyde d'aluminium hydraté, l'oxyde de magnésium, l'oxyde de zinc, et un de leurs mélanges, et/ou la charge minérale sans halogènes peuvent représenter au plus 30% en poids environ, de préférence au plus 20% en poids environ, de façon particulièrement préférée au plus 10% en poids environ, et de façon plus particulièrement préférée au plus 5% en poids environ, par rapport au poids total de la composition polymère.

Afin de garantir un câble électrique dit « HFFR » pour l'anglicisme *« Halogen Free Flame Retardant »,* le câble de l'invention ne comprend préférentiellement pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ..etc.

La composition polymère peut être préparée en mélangeant le matériau polymère thermoplastique à base de polypropylène avec au moins une charge inorganique choisie parmi de l'oxyde d'aluminium, un oxyde d'aluminium hydraté, l'oxyde de magnésium, l'oxyde de zinc, et un de leurs mélanges, éventuellement un liquide diélectrique et éventuellement un ou plusieurs additifs tels que définis dans l'invention.

La couche électriquement isolante du câble de l'invention est une couche non réticulée ou en d'autres termes une couche thermoplastique.

Dans l'invention, l'expression « couche non réticulée » ou « couche thermoplastique » signifie une couche dont le taux de gel selon la norme ASTM D2765-01 (extraction au xylène) est d'au plus 30% environ, de préférence d'au plus 20% environ, de façon particulièrement préférée d'au plus 10% environ, de façon plus particulièrement préférence d'au plus 5%, et de façon encore plus particulièrement préférée de 0%.

Dans un mode de réalisation de l'invention, la couche électriquement isolante, de préférence non réticulée, présente une conductivité thermique d'au moins 0,30 W/m.K à 40°C, de préférence d'au moins 0,31 W/m.K à 40°C, de façon particulièrement préférée d'au moins 0,32 W/m.K à 40°C, de façon plus particulièrement préférée d'au moins 0,33 W/m.K à 40°C, de façon encore plus particulièrement préférée d'au moins 0,34 W/m.K à 40°C, et de façon encore plus particulièrement préférée d'au moins 0,35 W/m.K à 40°C.

La conductivité thermique est de préférence mesurée selon la méthode bien connue sous l'anglicisme « Transient Plane Source ou TPS ». De manière avantageuse, la conductivité thermique est mesurée à l'aide d'un appareil commercialisé sous la référence HOT DISK TPS 2500S par la société THERMOCONCEPT.

Dans un mode de réalisation particulier, la couche électriquement isolante, de préférence non réticulée, présente une résistance à la traction (RT) d'au moins 8,5 MPa, de préférence d'au moins 10 MPa environ, et de façon particulièrement préférée d'au moins 15 MPa environ, avant vieillissement (selon la norme CEI 20-86).

Dans un mode de réalisation particulier, la couche électriquement isolante, de préférence non réticulée, présente une élongation à la rupture (ER) d'au moins 250% environ, de préférence d'au moins 300% environ, et de façon particulièrement préférée d'au moins 350% environ, avant vieillissement (selon la norme CEI 20-86).

Dans un mode de réalisation particulier, la couche électriquement isolante, de préférence non réticulée, présente une résistance à la traction (RT) d'au moins 8,5 MPa, de préférence d'au moins 10 MPa environ, et de façon particulièrement préférée d'au moins 15 MPa environ, après vieillissement (selon la norme CEI 20-86).

Dans un mode de réalisation particulier, la couche électriquement isolante, de préférence non réticulée, présente une élongation à la rupture (ER) d'au moins 250% environ, de préférence d'au moins 300% environ, et de façon particulièrement préférée d'au moins 350% environ, après vieillissement (selon la norme CEI 20-86).

La résistance à la traction (RT) et l'élongation à la rupture (ER) (avant ou après vieillissement) peuvent être effectués selon la Norme NF EN 60811-1-1, notamment à l'aide d'un appareil commercialisé sous la référence 3345 par la société Instron.

Le vieillissement est généralement effectué à 135°C pendant 240 heures (ou 10 jours).

La couche électriquement isolante du câble de l'invention est de préférence une couche recyclable.

La couche électriquement isolante de l'invention peut être une couche extrudée, notamment par des procédés bien connus de l'homme du métier.

La couche électriquement isolante présente une épaisseur variable en fonction du type de câble envisagé. En particulier, lorsque le câble conforme à l'invention est un câble à moyenne tension, l'épaisseur de la couche électriquement isolante est typiquement de 4 à 5,5 mm environ, et plus particulièrement de 4,5 mm environ. Lorsque le câble conforme à l'invention est un câble haute tension, l'épaisseur de la couche électriquement isolante varie typiquement de 17 à 18 mm (pour des tensions de l'ordre 150 kV environ) et pour aller jusqu'à des épaisseurs allant de 20 à 25 mm environ pour des tensions supérieures à 150 kV (câbles à haute tension). Les épaisseurs précitées dépendent de la taille de l'élément électriquement conducteur allongé.

Dans la présente invention, on entend par « couche électriquement isolante » une couche dont la conductivité électrique peut être d'au plus 1.10⁻⁸ S/m (siemens par mètre), de préférence d'au plus 1.10⁻⁹ S/m, et de façon particulièrement préférée d'au plus 1.10⁻¹⁰ S/m, mesurée à 25°C environ en courant continu.

La composition polymère peut alors comprendre moins de 6% en poids environ de charge électriquement conductrice, de préférence moins de 1% en poids environ de charge électriquement conductrice, et de façon particulièrement préférée 0% en poids environ de charge électriquement conductrice, par rapport au poids total de la composition polymère.

La charge électriquement conductrice peut être choisie parmi les noirs de carbone, les graphites, et un de leurs mélanges.

La couche électriquement isolante de l'invention peut comprendre au moins un matériau polymère thermoplastique à base de polypropylène, au moins une charge inorganique choisie parmi de l'oxyde d'aluminium, un oxyde d'aluminium hydraté, l'oxyde de magnésium, l'oxyde de zinc, et un de leurs mélanges, un ou plusieurs additifs, éventuellement au moins une charge inorganique différente de la charge inorganique choisie parmi de l'oxyde d'aluminium, un oxyde d'aluminium hydraté, l'oxyde de magnésium, l'oxyde de zinc, et un de leurs mélanges, et éventuellement au moins une charge minérale sans halogènes destinée à améliorer le comportement au feu de la composition polymère, les ingrédients précités étant tels que définis dans l'invention.

Les proportions des différents ingrédients dans la couche électriquement isolante peuvent être identiques à celles telles que décrites dans l'invention pour ces mêmes ingrédients dans la composition polymère.

Le câble de l'invention concerne plus particulièrement le domaine des câbles électriques fonctionnant en courant continu (DC) ou en courant alternatif (AC).

La couche électriquement isolante de l'invention peut entourer l'élément électriquement conducteur allongé.

L'élément électriquement conducteur allongé est de préférence positionné au centre du câble.

L'élément électriquement conducteur allongé peut être un conducteur monocorps tel que par exemple un fil métallique ou un conducteur multicorps tel qu'une pluralité de fils métalliques torsadés ou non.

L'élément électriquement conducteur allongé peut être en aluminium, en alliage d'aluminium, en cuivre, en alliage de cuivre, ou en une de leurs combinaisons.

Selon une forme de réalisation préférée de l'invention, le câble électrique comprend :
- au moins une couche semi-conductrice entourant l'élément électriquement conducteur allongé, et
- une couche électriquement isolante telle que définie dans l'invention.

La couche électriquement isolante a plus particulièrement une conductivité électrique inférieure à celle de la couche semi-conductrice. Plus particulièrement, la conductivité électrique de la couche semi-conductrice peut être au moins 10 fois supérieure à la conductivité électrique de la couche électriquement isolante, de préférence au moins 100 fois supérieure à la conductivité électrique de la couche électriquement isolante, et de façon particulièrement préférée au moins 1000 fois supérieure à la conductivité électrique de la couche électriquement isolante.

La couche semi-conductrice peut entourer la couche électriquement isolante. La couche semi-conductrice peut alors être une couche semi-conductrice externe.

La couche électriquement isolante peut entourer la couche semi-conductrice. La couche semi-conductrice peut alors être une couche semi-conductrice interne.

La couche semi-conductrice est de préférence une couche semi-conductrice interne.

Le câble électrique de l'invention peut en outre comprendre une autre couche semi-conductrice.

Ainsi, dans ce mode de réalisation, le câble de l'invention peut comprendre :
- au moins un élément électriquement conducteur allongé, de préférence positionné au centre du câble,
- une première couche semi-conductrice entourant l'élément électriquement conducteur allongé,
- une couche électriquement isolante entourant la première couche semi-conductrice, et
- une deuxième couche semi-conductrice entourant la couche électriquement isolante,
la couche électriquement isolante étant telle que définie dans l'invention.

Dans la présente invention, on entend par « couche semi-conductrice » une couche dont la conductivité électrique peut être strictement supérieure à 1.10⁻⁸ S/m (siemens par mètre), de préférence d'au moins 1.10⁻³ S/m, et de préférence peut être inférieure à 1.10³ S/m, mesurée à 25°C en courant continu.

Dans un mode de réalisation particulier, la première couche semi-conductrice, la couche électriquement isolante et la deuxième couche semi-conductrice constituent une isolation tricouche. En d'autres termes, la couche électriquement isolante est en contact physique direct avec la première couche semi-conductrice, et la deuxième couche semi-conductrice est en contact physique direct avec la couche électriquement isolante.

La première couche semi-conductrice (respectivement la deuxième couche semi-conductrice) est de préférence obtenue à partir d'une composition polymère comprenant au moins un matériau polymère thermoplastique à base de polypropylène tel que défini dans l'invention, et éventuellement au moins une charge électriquement conductrice telle que définie dans l'invention.

La charge électriquement conductrice représente de préférence une quantité suffisante pour que la couche soit semi-conductrice.

De préférence, la composition polymère peut comprendre au moins 6% en poids environ de charge électriquement conductrice, de préférence au moins 10% en poids environ de charge électriquement conductrice, préférentiellement au moins 15% en poids environ de charge électriquement conductrice, et encore plus préférentiellement au moins 25% en poids environ de charge électriquement conductrice, par rapport au poids total de la composition polymère.

La composition polymère peut comprendre au plus 45% en poids environ de charge électriquement conductrice, et de préférence au plus 40% en poids environ de charge électriquement conductrice, par rapport au poids total de la composition polymère.

La première couche semi-conductrice (respectivement la deuxième couche semi-conductrice) est de préférence une couche thermoplastique ou une couche non réticulée.

Le câble peut comprendre en outre une gaine extérieure de protection entourant la couche électriquement isolante (ou la deuxième couche semi-conductrice si elle existe).

La gaine extérieure de protection peut être en contact physique direct avec la couche électriquement isolante (ou la deuxième couche semi-conductrice si elle existe).

La gaine extérieure de protection peut être une gaine électriquement isolante.

Le câble électrique peut comprendre en outre un écran électrique (e.g. métallique) entourant la deuxième couche semi-conductrice. Dans ce cas, la gaine électriquement isolante entoure ledit écran électrique et l'écran électrique est entre la gaine électriquement isolante et la deuxième couche semi-conductrice.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

L'écran métallique du câble électrique de l'invention peut comprendre un écran dit « filaire » et un écran dit « étanche » ou un écran dit « filaire » et un écran dit « rubané ».

Tous les types d'écrans métalliques peuvent jouer le rôle de mise à la terre du câble électrique et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, ces couches permettant d'assurer l'étanchéité longitudinale du câble électrique à l'eau.

L'invention a pour deuxième objet un procédé de fabrication d'un câble électrique conforme au premier objet de l'invention, caractérisé en ce qu'il comprend au moins une étape 1) d'extrusion d'une composition polymère telle que définie dans le premier objet de l'invention autour d'un élément électriquement conducteur allongé, pour obtenir une couche électriquement isolante (extrudée) entourant ledit élément électriquement conducteur allongé.

L'étape 1) est réalisée par des techniques bien connues de l'homme du métier, par exemple à l'aide d'une extrudeuse.

Lors de l'étape 1), la composition en sortie d'extrudeuse est dite « non réticulée », la température ainsi que le temps de mise en oeuvre au sein de l'extrudeuse étant optimisés en conséquence.

En sortie d'extrudeuse, on obtient donc une couche extrudée autour dudit élément électriquement conducteur, pouvant être ou non, directement en contact physique avec ledit élément électriquement conducteur allongé.

Le procédé ne comprend pas de préférence d'étape de réticulation de la couche obtenue à l'étape 1).

La couche électriquement isolante et/ou la ou les couche(s) semi-conductrice(s) du câble électrique de l'invention peuvent être obtenues par extrusion successive ou par co-extrusion.

Préalablement à l'extrusion de chacune de ces couches autour d'au moins un élément électriquement conducteur allongé, l'ensemble des constituants nécessaires à la formation de chacune de ces couches peut être dosé et mélangé dans un mélangeur en continu de type co-malaxeur BUSS, extrudeuse bi-vis ou un autre type de mélangeur approprié pour des mélanges polymères, notamment chargés. Le mélange peut être ensuite extrudé sous forme de joncs, puis refroidi et séché pour être mis sous forme de granulés, ou alors le mélange peut être mis directement sous forme de granulés, par des techniques bien connues de l'homme du métier. Ces granulés peuvent être ensuite introduits au sein d'une extrudeuse mono-vis afin d'extruder et de déposer la composition autour de l'élément électriquement conducteur allongé pour former la couche en question.

Les différentes compositions peuvent être extrudées les unes à la suite des autres pour entourer de façon successive l'élément électriquement conducteur allongé, et ainsi former les différentes couches du câble électrique de l'invention.

Elles peuvent alternativement être extrudées concomitamment par co-extrusion à l'aide d'une unique tête d'extrudeuse, la co-extrusion étant un procédé bien connu de l'homme du métier.

Que ce soit dans l'étape de formation des granulés ou dans l'étape d'extrusion sur câble, les conditions opératoires sont bien connues de l'homme du métier. Notamment, la température au sein du dispositif de mélange ou d'extrusion peut être supérieure à la température de fusion du polymère majoritaire ou du polymère ayant la température de fusion la plus élevée, parmi les polymères utilisés dans la composition à mettre en oeuvre.

### Exemples

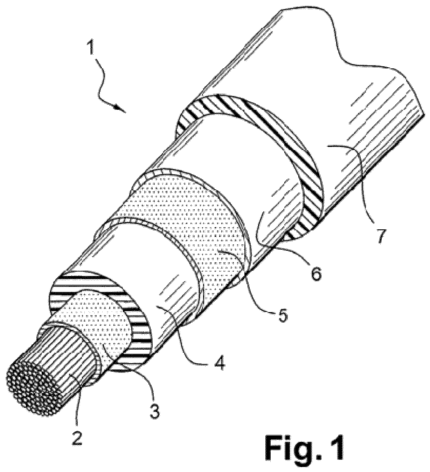

La figure 1 représente une vue schématique d'un câble électrique selon un mode de réalisation préféré conforme à l'invention.

Pour des raisons de clarté, seuls les éléments essentiels pour la compréhension de l'invention ont été représentés de manière schématique, et ceci sans respect de l'échelle.

Le câble électrique 1 à moyenne ou haute tension conforme au premier objet de l'invention, illustré dans la figure 1, comprend un élément électriquement conducteur 2 allongé central, notamment en cuivre ou en aluminium. Le câble électrique 1 comprend en outre plusieurs couches disposées successivement et coaxialement autour de cet élément électriquement conducteur allongé central 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche électriquement isolante 4 est une couche extrudée non réticulée, obtenue à partir de la composition polymère telle que définie dans l'invention.

Les couches semi-conductrices 3 et 5 sont des couches extrudées thermoplastiques (i.e. non réticulées).

La présence de l'écran métallique 6 et de la gaine extérieure de protection 7 est préférentielle, mais non essentielle, cette structure de câble étant en tant que telle bien connue de l'homme du métier.

### Compositions polymères

Une composition **I1** conforme à l'invention, i.e. comprenant au moins un matériau polymère thermoplastique à base de polypropylène et au moins de l'oxyde d'aluminium en tant que charge inorganique, a été comparée à une composition **C1** comparative, la composition **C1** correspondant à une composition comprenant un matériau polymère thermoplastique à base de polypropylène identique à celui utilisé pour la composition de l'invention **I1** mais comprenant à la place de l'oxyde d'aluminium, du kaolin en tant que charge inorganique.

Le tableau 1 ci-dessous rassemble des compositions polymères dont les quantités des composés sont exprimées en pourcentages en poids, par rapport au poids total de la composition polymère.

**TABLEAU 1**

| **Compositions polymères** | **C1 (*)** | **I1** |
|---|---|---|
| Copolymère de propylène hétérophasé | 15 | 29 |
| Copolymère de propylène statistique | 44 | 29 |
| Polyéthylène haute densité | 21,5 | 21,5 |
| Charge inorganique : kaolin | 15 | 0 |
| Charge inorganique : oxyde d'aluminium | 0 | 15 |
| Liquide diélectrique | 4,5 | 4,5 |
| Antioxydant | 1.0 | 1,0 |

| | | |
|---|---|---|
| (*) Composition comparative ne faisant pas partie de l'invention | | |

L'origine des composés du tableau 1 est la suivante :
- polyéthylène haute densité commercialisé sous la référence Eltex A4009MFN1325 par la société Ineos et dont la densité est de 0,960 g/cm³ selon la norme ISO 1183A à une température de 23°C (MFI=0,9), et le module élastique est de 1700 MPa;
- copolymère de propylène hétérophasé commercialisé par la société Basell Polyolefins sous la référence Adflex^{®} Q 200F ;
- copolymère statistique de propylène commercialisé par la société par la société Borealis sous la référence Bormed^{®} RB 845 MO ;
- liquide diélectrique comprenant 95% en poids d'une huile minérale commercialisée par la société Nynas sous la référence Nytex 810, et 5% en poids de benzophénone commercialisée par la société Sigma-Aldrich sous la référence B9300, par rapport au poids total du liquide diélectrique ;
- antioxydant commercialisé par la société Ciba sous la référence Irganox B 225 qui comprend un mélange équimolaire d'Irgafos 168 et d'Irganox 1010 ;
- craie en tant que charge inorganique commercialisée sous la référence Omya EXH1, et
- oxyde d'aluminium en tant que charge inorganique commercialisée sous la référence P122SB ou Timal-12.

### 2. Préparation des couches non réticulées

Les compositions rassemblées dans le tableau 1 sont mises en oeuvre comme suit.

Les constituants suivants : huile minérale, antioxydant et benzophénone des compositions **C1** et **I1** référencées dans le tableau 1, pour chaque couche à considérer, sont dosés et mélangés sous agitation à 75°C environ, afin de former un mélange liquide comprenant le liquide diélectrique.

Le mélange liquide est ensuite mélangé aux constituants suivants : copolymère de propylène hétérophasé, copolymère statistique de propylène, polyéthylène haute densité des compositions **C1** et **I1** référencées dans le tableau 1, pour chaque couche polymère à considérer, dans un récipient. Puis, le mélange résultant et la charge inorganique, pour chaque couche polymère à considérer, est homogénéisé à l'aide d'une extrudeuse à double vis (« Berstorff twin screw extruder ») à une température de 145 à 180°C environ, puis fondu à 200°C environ (vitesse des vis : 80 tours/min).

Le mélange homogénéisé et fondu est ensuite mis sous la forme de granulés.

Les granulés ont ensuite été pressés à chaud pour former des couches sous la forme de plaques.

On a ainsi préparé chacune des compositions polymères **C1** et **I1** sous la forme de couches de 1 mm d'épaisseur pour l'évaluation de leurs propriétés mécaniques et également de couches de 8 mm d'épaisseur pour effectuer les mesures de conductivité thermique.

Ces compositions **C1** et **I1** ont ensuite été comparées du point de vue de leurs propriétés mécaniques (résistance à la traction/élongation à la rupture avant et après vieillissement à 135°C pendant 240 heures) et de leur conductivité thermique.

Les tests de résistance à la traction (RT) et d'élongation à la rupture (ER) ont été effectués sur les matériaux selon la Norme NF EN 60811-1-1, à l'aide d'un appareil commercialisé sous la référence 3345 par la société Instron.

Les résultats correspondant à chacun de ces tests sont reportés dans le tableau 2 (propriétés mécaniques) ci-dessous :

**TABLEAU 2**

| **Propriétés** | **C1 (*)** | **I1** |
|---|---|---|
| RT (MPa) | 13,5 | 19,5 |
| ER (%) | 445 | 692 |
| RT après vieillissement (MPa) | 15,1 | 19,2 |
| ER après vieillissement (%) | 372,75 | 613,93 |

| | | |
|---|---|---|
| (*) Composition comparative ne faisant pas partie de l'invention | | |

L'ensemble de ces résultats montre que l'incorporation d'une charge inorganique telle que définie dans l'invention dans une matrice de polypropylène améliore les propriétés mécaniques de la couche électriquement isolante, notamment en termes de résistance à la traction et d'élongation à la rupture, y compris après vieillissement.

Les tests de conductivité thermique ont été effectués sur les matériaux selon la méthode bien connue sous l'anglicisme « Transient Plane Source ou TPS » et à l'aide d'un appareil commercialisé sous la référence HOT DISK TPS 2500S par la société THERMOCONCEPT.

Les résultats correspondant à ces tests sont reportés dans le tableau 3 (conductivité thermique) ci-dessous :

**TABLEAU 3**

| **Propriétés** | **C1 (*)** | **I1** |
|---|---|---|
| Conductivité thermique à 40°C (W/m.K) | 0,28 | 0,31 |

| | | |
|---|---|---|
| (*) Composition comparative ne faisant pas partie de l'invention | | |

Les résultats de conductivité thermique montrent que la présence d'une charge inorganique telle que définie dans l'invention dans une matrice de polypropylène conduit à une couche électriquement isolante ayant une conductivité thermique supérieure à celle d'une couche électriquement isolante dans laquelle la charge inorganique est de la craie.

## Revendications

1. Câble électrique comprenant au moins un élément électriquement conducteur allongé et au moins une couche électriquement isolante obtenue à partir d'une composition polymère comprenant au moins un matériau polymère thermoplastique à base de polypropylène et au moins une charge inorganique, la charge inorganique est choisie parmi de l'oxyde d'aluminium, un oxyde d'aluminium hydraté, l'oxyde de magnésium, l'oxyde de zinc, et un de leurs mélanges, la composition polymère comprend en outre un liquide diélectrique, **caractérisé en ce que** la charge inorganique représente au moins 10% en poids, par rapport au poids total de la composition polymère.

2. Câble électrique (1) selon la revendication 1, **caractérisé en ce que** la charge inorganique est l'oxyde d'aluminium.

3. Câble électrique (1) selon l'une quelconque des revendications précédentes, **caractérisé en ce que** la charge inorganique est sous la forme de particules de dimension allant de 0,01 à 6 µm.

4. Câble électrique (1) selon l'une quelconque des revendications précédentes, **caractérisé en ce que** le matériau polymère thermoplastique à base de polypropylène comprend un copolymère de propylène P₁.

5. Câble électrique (1) selon la revendication 4, **caractérisé en ce que** le copolymère de propylène P₁ est un copolymère statistique de propylène ou un copolymère de propylène hétérophasé.

6. Câble électrique (1) selon l'une quelconque des revendications précédentes, **caractérisé en ce que** le matériau polymère thermoplastique à base de polypropylène comprend un copolymère statistique de propylène et un copolymère de propylène hétérophasé, ou deux copolymères de propylène hétérophasés différents.

7. Câble électrique (1) l'une quelconque des revendications 4 à 6, **caractérisé en ce que** le matériau polymère thermoplastique à base de polypropylène comprend en outre un homopolymère ou un copolymère d'oléfine P₂.

8. Câble électrique (1) selon l'une quelconque des revendications précédentes, **caractérisé en ce que** le liquide diélectrique comprend au moins une huile minérale.

9. Câble électrique (1) selon l'une quelconque des revendications précédentes, **caractérisé en ce que** la couche électriquement isolante est une couche non réticulée.

10. Câble électrique (1) selon l'une quelconque des revendications précédentes, **caractérisé en ce que** la couche électriquement isolante présente une résistance à la traction avant ou après vieillissement d'au moins 8,5 MPa.

11. Câble électrique (1) selon l'une quelconque des revendications précédentes, **caractérisé en ce que** la couche électriquement isolante présente une élongation à la rupture avant ou après vieillissement d'au moins 250%.

12. Câble électrique (1) selon l'une quelconque des revendications précédentes, **caractérisé en ce qu'**il comprend :
- au moins une couche semi-conductrice (3, 5) entourant l'élément électriquement conducteur allongé (2), et
- au moins une couche électriquement isolante (4) entourant l'élément électriquement conducteur allongé (2),
la couche électriquement isolante étant telle que définie à l'une quelconque des revendications précédentes.

13. Procédé de fabrication d'un câble électrique tel que défini à l'une quelconque des revendications précédentes, **caractérisé en ce qu'**il comprend au moins une étape 1) d'extrusion de la composition polymère autour de l'élément électriquement conducteur allongé, pour obtenir une couche électriquement isolante entourant ledit élément électriquement conducteur allongé.

## Patentansprüche

1. Elektrisches Kabel, umfassend mindestens ein verlängertes elektrisch leitendes Element und mindestens eine elektrisch isolierende Schicht, erhalten aus einer Polymerzusammensetzung, umfassend mindestens ein thermoplastisches Polymermaterial auf der Grundlage von Polypropylen und mindestens einen anorganischen Füllstoff, wobei der anorganische Füllstoff ausgewählt ist aus Aluminiumoxid, Aluminiumoxydhydrat, Magnesiumoxyd, Zinkoxyd und eine ihrer Mischungen, wobei die Polymerzusammensetzung außerdem eine dielektrische Flüssigkeit umfasst, **dadurch gekennzeichnet, dass** der anorganische Füllstoff mindestens 10 Gew% mit Bezug auf das Gesamtgewicht der Zusammensetzung umfasst.

2. Elektrisches Kabel (1) nach Anspruch 1, **dadurch gekennzeichnet, dass** der anorganische Füllstoff Aluminiumoxid ist.

3. Elektrisches Kabel (1) nach einem der vorhergehenden Ansprüche, **dadurch gekennzeichnet, dass** der anorganische Füllstoff die Form von Partikeln mit einer Abmessung aufweist, die von 0,01 bis 6 µm reicht.

4. Elektrisches Kabel (1) nach einem der vorhergehenden Ansprüche, **dadurch gekennzeichnet, dass** das thermoplastische Polymermaterial auf der Grundlage von Polypropylen ein Propylencopolymer P₁ umfasst.

5. Elektrisches Kabel (1) nach Anspruch 4, **dadurch gekennzeichnet, dass** das Propylencopolymer P₁ ein statisches Propylencopolymer oder ein heterophasisches Propylencopolymer ist.

6. Elektrisches Kabel (1) nach einem der vorhergehenden Ansprüche, **dadurch gekennzeichnet, dass** das thermoplastische Polymermaterial auf der Grundlage von Polypropylen ein statisches Propylencopolymer und ein hererophasisches Propylencopolymer oder zwei verschiedene heterophasische Propylencopolymere umfasst.

7. Elektrisches Kabel (1) nach einem der Ansprüche 4 bis 6, **dadurch gekennzeichnet, dass** das thermoplastische Polymermaterial auf der Grundlage von Polypropylen außerdem ein Olefinhomopolymer oder -copolymer P₂ umfasst.

8. Elektrisches Kabel (1) nach einem der vorhergehenden Ansprüche, **dadurch gekennzeichnet, dass** die dielektrische Flüssigkeit mindestens ein mineralisches Öl umfasst.

9. Elektrisches Kabel (1) nach einem der vorhergehenden Ansprüche, **dadurch gekennzeichnet, dass** die elektrisch isolierende Schicht eine nicht vernetzte Schicht ist.

10. Elektrisches Kabel (1) nach einem der vorhergehenden Ansprüche, **dadurch gekennzeichnet, dass** die elektrisch isolierende Schicht eine Zugfestigkeit vor oder nach der Alterung von mindestens 8,5 MPa aufweist.

11. Elektrisches Kabel (1) nach einem der vorhergehenden Ansprüche, **dadurch gekennzeichnet, dass** die elektrisch isolierende Schicht eine Reißdehnung vor oder nach der Alterung von mindestens 250 % aufweist.

12. Elektrisches Kabel (1) nach einem der vorhergehenden Ansprüche, **dadurch gekennzeichnet, dass** es Folgendes umfasst:
- mindestens eine halbleitende Schicht (3, 5), die das längliche elektrisch leitende Element (2) umgibt, und
- mindestens eine elektrisch isolierende Schicht (4), die das längliche elektrisch leitende Element (2) umgibt,
wobei die elektrisch isolierende Schicht wie in einem der vorhergehenden Ansprüche definiert ist.

13. Verfahren zur Herstellung eines elektrischen Kabels, wie in einem der vorhergehenden Ansprüche definiert, **dadurch gekennzeichnet, dass** es mindestens einen Schritt 1) des Extrudierens der Polymerzusammensetzung um das längliche elektrisch leitende Element (2) umfasst, um eine elektrisch isolierende Schicht zu erhalten, die das längliche elektrisch leitende Element umgibt.

## Claims

1. An electric cable comprising at least one elongate electrically conductive element and at least one electrically insulating layer obtained from a polymer composition comprising at least one polypropylene-based thermoplastic polymer material and at least one inorganic filler, the inorganic filler is selected from among aluminium oxide, a hydrated aluminium oxide, magnesium oxide, zinc oxide and one of the mixtures thereof, the polymer composition further comprises a dielectric fluid, **characterized in that** the inorganic filler represents at least 10 % by weight relative to the total weight of the polymer composition.

2. The electric cable (1) according to claim 1, **characterized in that** the inorganic filler is aluminium oxide.

3. The electric cable (1) according to any of the preceding claims, **characterized in that** the inorganic filler is in the form of particles having a size ranging from 0.01 to 6 µm.

4. The electric cable (1) according to any of the preceding claims, **characterized in that** the polypropylene-based thermoplastic polymer material comprises a P₁ propylene copolymer.

5. The electric cable (1) according to claim 4, **characterized in that** the P₁ propylene copolymer is a statistical propylene copolymer or a heterophasic propylene copolymer.

6. The electric cable (1) according to any of the preceding claims, **characterized in that** the polypropylene-based thermoplastic polymer material comprises a statistical propylene copolymer and a heterophasic propylene copolymer, or two different heterophasic propylene copolymers.

7. The electric cable (1) according to any of claims 4 to 6, **characterized in that** the polypropylene-based thermoplastic polymer material further comprises a P₂ olefin homopolymer or copolymer.

8. The electric cable (1) according to any of the preceding claims, **characterized in that** the dielectric fluid comprises at least one mineral oil.

9. The electric cable (1) according to any of the preceding claims, **characterized in that** the electrically insulating layer is a non-crosslinked layer.

10. The electric cable (1) according to any of the preceding claims, **characterized in that** the electrically insulating layer has a tensile strength before or after ageing of at least 8.5 MPa.

11. The electric cable (1) according to any of the preceding claims, **characterized in that** the electrically insulating layer has elongation at break before or after ageing of at least 250 %.

12. The electric cable (1) according to any of the preceding claims, **characterized in that** it comprises:
- at least one semiconductive layer (3, 5) surrounding the elongate electrically conductive element (2), and
- at least one electrically insulating layer (4) surrounding the elongate electrically conductive element (2)
the electrically insulating layer being such as defined in any of the preceding claims.

13. A method for manufacturing an electric cable such as defined in any of the preceding claims, **characterized in that** it comprises at least one step 1) to extrude the polymer composition around the elongate electrically conductive element, to obtain an electrically insulating layer surrounding said elongate electrically conductive element.
